Europäisches Patentamt

European Patent Office

Office européen des brevets

(11) Publication number: **0 275 465 B1**

# EUROPEAN PATENT SPECIFICATION

(45) Date of publication of patent specification: **19.08.92**    (51) Int. Cl.5: **C25B 11/20**, H01M 8/10

(21) Application number: **87118344.8**

(22) Date of filing: **10.12.87**

(54) A composite membrane/electrode structure having interconnected roadways of catalytically active particles.

(30) Priority: **19.12.86 US 944396**
**19.12.86 US 944278**
**19.12.86 US 944279**
**19.12.86 US 944475**

(43) Date of publication of application:
**27.07.88 Bulletin 88/30**

(45) Publication of the grant of the patent:
**19.08.92 Bulletin 92/34**

(84) Designated Contracting States:
**AT BE CH DE ES FR GB IT LI LU NL SE**

(56) References cited:
**EP-A- 0 031 660**
**GB-A- 2 073 252**
**GB-A- 2 101 160**

(73) Proprietor: **THE DOW CHEMICAL COMPANY**
**2030 Dow Center Abbott Road P.O. Box 1967**
**Midland Michigan 48640-1967(US)**

(72) Inventor: **McMichael, James W.**
**426 Southern Oaks Drive**
**Lake Jackson Texas 77566(US)**
Inventor: **Door, Robert D.**
**322 Lamar Street**
**West Columbia Texas 77486(US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

## Description

The term "M & E" stands for Membrane and Electrode and is a structure composed of a substantially planar, sheet-like ion exchange membrane having a plurality of electrically conductive, catalytically active particles present on one or both major planar surfaces of the membrane. The catalytically active particles serve as a particulate electrode when the M & E is used in an electrochemical cell. M & E structures are sometimes called solid polymer electrolyte structures, or SPE structures.

"M & E cells" are electrochemical cells employing an M & E structure. Such cells can be operated as an electrolytic cell for the production of electrochemical products, or they may be operated as fuel cells for the production of electrical energy. Electrolytic cells may, for example, be used for the electrolysis of an alkali metal halide such as sodium chloride or for the electrolysis of water.

M & E cells are known in the art and are disclosed in the following U.S. Patent Nos.: 4,293,394; 4,299,674; 4,299,675; 4,319,969; 4,345,986; 4,386,987; 4,416,932; 4,457,822; 4,469,579; 4,498,942; 4,315,805; 4,364,815; 4,272,353 and 4,394,299.

In M & E cells, frequently, a gaseous product is produced at the catalytically active particles. The gas bubbles off the particles (serving as an electrode) into an electrolyte that contacts the M & E during cell operation. However, the gaseous products that are produced within the pores of the particles, or at the particle/membrane interface, must diffuse out through the pores of the particles before they can bubble into the electrolyte and be removed. Because gases are produced faster than they can escape, they build up within the catalytically active particles or at the particles/membrane interface and cause a decrease in the efficiency of the operation of the M & E cell. Even worse, some gases permeate through the membrane and contaminate the product(s) produced on the other side of the membrane. In chlor-alkali cells, where hydrogen is produced on one side of the membrane and chlorine is produced on the other side of the membrane, hydrogen can permeate through the membrane and contaminate the chlorine, or vice-versa. This contamination can also be hazardous because of the explosive nature of a chlorine/hydrogen mixture.

The prior art has attempted to minimize the problem of gaseous buildup at the M & E by making porous electrodes for M & E's. See, for example, U.S. Patent No. 4,276,146. Some porous M & E electrodes may be formed by including a pore former, such as sodium chloride, in the catalytically active particles during the M & E preparation process. The sodium chloride is later leached out leaving a porous M & E structure. However, such coatings do not solve the gas diffusion problem because a significant reduction in the hydrogen contamination of the chlorine is not realized. Also, the porous catalytically active particles are fragile and do not hold up well to the action of gas evolution, which leads to a loss of catalytic particles resulting in a lower efficiency of the cell.

EP-A-0 031 660 describes an electrolysis apparatus comprising a diaphragm which can be an ion exchange membrane and an electrode consisting of a gas-permeable electrically conductive substrate and a film-like porous electrode catalyst layer bonded to said membrane.

The present invention provides an M & E structure which is especially designed to minimize the permeation of gaseous products through the membrane and into the opposing side of the cell and to improve the electrical efficiency of the cell.

M & E electrode coatings are made using materials that are relatively expensive. The present invention reduces the amount of catalytic material used in the electrode without sacrificing the catalytic activity and efficiency of the coating.

In M & E's of the prior art, a woven, electrically conductive window-like screen was used to support the M & E. However, a woven screen is not entirely satisfactory because of its uneven surface. When a woven screen is pressed into catalytically active particles or the planar, sheet-like membrane, some portions of the screen penetrate further into the membrane than other portions of the screen. This technique results in uneven contact of the screen with the electrode coating and membrane and in an uneven transfer of electrical energy across the face of the membrane. In addition, some parts of the membrane are more likely to rupture when the screen penetrates the membrane.

Another problem with the use of a woven screen concerns the protection of the membrane from being torn or ruptured by mattresses (resilient devices) which may be used to hold a current collector against the catalytically active particles on the surface of the membrane. Accordingly, prior art woven screens therefore do not provide as much protection as is provided by the substantially flat electrically conductive screen of the present invention.

The present invention provides a support structure for M & E's which minimizes most of the problems of using a woven screen type structure.

In particular, the present invention is a composite membrane/electrode structure comprising: a substantially planar ion exchange membrane having a plurality of interconnected roadways of catalytically active particles bonded to at least one surface of the membrane.

The present invention also relates to a generally planar electrically conductive screen having a plurality of openings passing therethrough, said openings occupying up to about 75 percent of the surface area of the screen, a plurality of catalytically active particles disposed on at least a portion of one planar surface of the screen and in physical and electrical contact with said planar surface, and an ion exchange membrane bonded to the catalytically active particles and the planar surface of the screen such that the active particles are sandwiched between the membrane and the screen.

The present invention also provides a method for making an improved composite membrane/electrode structure comprising the steps of at least partially coating at least one surface of a substantially planar screen template with a plurality of catalytically active particles, wherein said screen template has a plurality of openings passing therethrough, said openings occupying up to about 75 percent of the surface area of the screen template, contacting an ion exchange membrane with the coated surface of the screen template, transferring the catalytically active particles from the screen template to the membrane, removing the screen template, and bonding the catalytically active particles to the membrane.

The present invention further resides in a method for making a composite membrane/electrode structure comprising the steps of coating at least a portion of at least one surface of a substantially planar electrically conductive screen with a solution/dispersion of catalytically active particles and a solvent/dispersant, said screen having a plurality of openings passing therethrough, said openings occupying up to about 75 percent of the surface area of the electrically conductive screen, contacting the coated surface of the screen with an ion exchange membrane and bonding the coated screen to the membrane.

The invention is more particularly illustrated in the drawings, wherein:

Figure 1 is a side view of one type of substantially flat screen or screen template that is suitable for use in the present invention.

Figure 2 is a side view of another type of substantially flat screen or screen template that is suitable for use in the present invention.

Figure 3 is a top view of a section of the interconnected roadway pattern of the catalytically active particles deposited on a membrane.

It has been discovered that M & E structures having interconnected roadways of catalytically active particles deposited on a membrane, as opposed to M & E's of the prior art that have substantially continuous coatings of catalytically active particles, surprisingly operate at very high efficiency when used in an electrochemical cell. It is surmised that the increased efficiency results from the open areas provided between the interconnected roadway of catalytically active particles on the membrane. These open areas provide electrically inactive spaces for the removal of gases generated at the catalytically active surface. In addition, the width of the interconnected roadways is such that they provide a short pathway for the escape of gases that form in the interfacial area between the catalytically active particles and the membrane, thus minimizing gas blockage of the membrane. The pattern of the catalytically active particles is designed so that the pathway for the escape of gases from and around the interconnected roadways of particles is less than the resistance to flow through the membrane. Thus, it is easier for the gases to escape through and around the interconnected roadways of catalytically active particles than it is to permeate the membrane and escape into the opposing cell compartment.

The size, shape and thickness of the interconnected roadways of catalytically active particles of the present invention depends upon the type of ion exchange membrane being used. That is, a membrane with a high resistance to gas permeation may allow the use of larger interconnected roadways of particles, while a membrane having a low resistance to the permeation of gases may require smaller inter-connected roadways of particles. For example, in a chlor-alkali electrolytic cell, a bilayer ion exchange membrane having an overall thickness of about 4 mils (0.1 mm), and comprising a polymer layer having sulfonic ion exchange groups approximately 3.5 mils (0.09 mm) thick and polymer layer having carboxylic ion exchange groups approximately 0.5 mil (0.01 mm) thick may have interconnected roadways of catalytically active particles having a predetermined dimension. The term "dimension" herein applies to roadways of catalytically active particles having a predetermined width. The roadways can have a symmetrical or a non-symmetrical pattern. The minimum width of the roadways is greater than 20$\mu$m (microns). The maximum width of the roadways is less than 0.5 cm, preferably less than 0.2 cm.

The porosity of the layer of catalytically active particles serving as the M & E structure is also very important in allowing a gas which is formed during cell operation to escape. The M & E's of the prior art have microporous openings which function to a limited extent to provide a pathway for the escape of gases. However, it has been discovered that a "macroporous" coating rather than a continuous coating having "microporous" openings are highly desirable because they provide a large amount of space for the gases to escape. Thus, the screen used in the present invention allows for the preparation of M & E structures which are macroporous (i.e., structures which have a multiplicity of interconnected roadways of catalytically active particles), as opposed to the microporous M & E's of the prior art. The macroporous nature of the M & E structure of the present invention allows the electrochemical cells in which they are used to operate at a higher efficiency.

The screen or screen template used in the present invention is a substantially flat and planar screen that has a plurality of spaced apart openings. The term "screen" as used herein applies interchangeably to a screen which is embedded or bonded to the membrane and a "screen template" which is used as a temporary means to provide the membrane with a plurality of roadways of catalytically active particles and which is subsequently removed from the membrane. Preferably, the screen is substantially completely flat on at least one surface. The flatness is particularly desirable because it makes it possible to form a M & E structure that has well-defined, controlled, open areas and, likewise, corresponding areas that can be coated with the catalytically active particles. Accordingly, when the catalytic coating is placed on the screen and later embedded into the membrane, a substantial portion of the membrane is left exposed. This minimizes the amount of catalytic material that is used for forming the M & E structure and maximizes the area for the escape of gaseous products from the electrode coating because of the presence of a larger amount of open area. The screen is preferably a metallic screen although, in the case of a screen template, it can be made of substantially any other material capable of being provided with a multiplicity of openings.

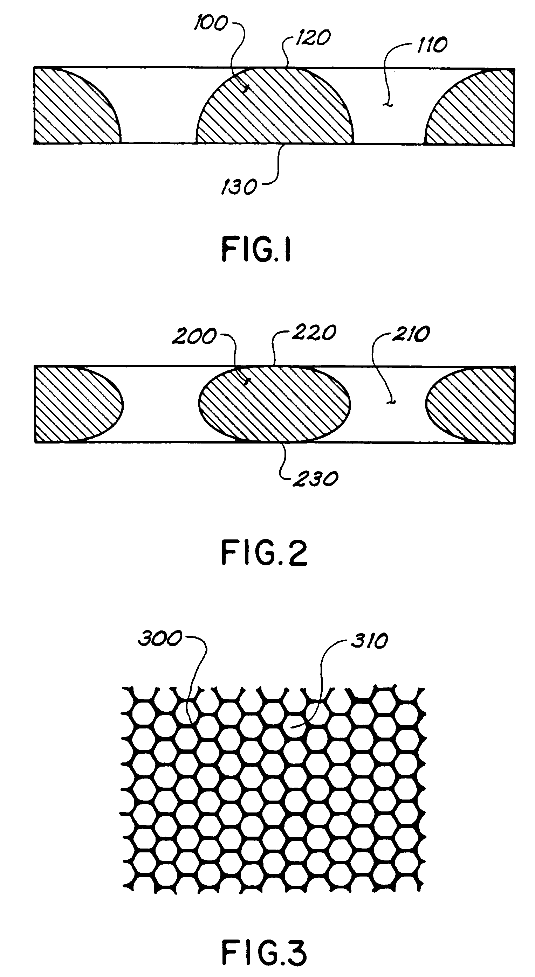

With particular reference to the drawings, Figure 1 is a side view of one type of screen that is suitable for use in the present invention. The metal 100 has one flat side 130 and one rounded side 120. The rounded side 120 also has a slightly flattened portion. The screen has an opening 110 connecting its two opposite sides.

Figure 2 is a side view of another type of screen 200 that is suitable for use in the present invention. The metal has generally rounded sides 220 and 230 which also have slightly flattened portions. The screen has openings 210 connecting its opposite sides.

Figure 3 is a top view of a section of the interconnected roadway pattern 300 of the catalytically active particles deposited on the membrane. Between the interconnected roadway pattern are a plurality of openings 310 which are not interconnected, i.e. which are isolated from each other.

The thickness of the screen is not critical to the successful operation of the present invention. However, for convenience and ease of handling, the screen preferably does not exceed the thickness of the membrane.

The width or diameter of the interconnected roadways of catalytically active particles bonded to the membrane is stated to be less than 1 cm. Dimensions larger than 1 cm result in increased gas contamination of the products produced on the opposing side of the cell, because the gas finds less resistance in going through the membrane to the opposing side of the cell than it finds in escaping through the catalytically active particles.

According to the method of the present invention, the interconnected roadways of catalytically active particles match the pattern of the screen or screen template that is used. Thus, the shape and size of the screen would, therefore, describe the shape and size of the interconnected roadways of catalytically active particles. The screen generally has up to 75 percent of its surface provided with openings, preferably the screen has from 25 to 75 percent open area, more preferably from 40 to 60 percent, most preferably from 45 to 55 percent. This provides a sufficient number of open areas on the membrane surface for the escape of gases formed at the catalytically active particles.

Optionally, the screen can be constructed so that it has no openings around its peripheral edge, thus providing a nonporous area where a gasket can be placed when the M & E structure is assembled with other components to form an electrochemical cell.

A screen that is particularly suitable for forming the interconnected roadways of catalytically active particles on the membrane is an electroformed screen having a plurality of openings that are spaced apart and isolated from each other.

Electroforming is the process in which metal is electrochemically deposited on a matrix in a photographically determined pattern. The pattern on the photographic plate is established to provide for a metal matrix having a plurality of openings when the metal is deposited on and then removed from the photographic plate. The so produced screen is photo-perfect and substantially flat. Because the openings are produced by a buildup of metal around each of them, they have a characteristic arch shape. This shape offers smooth passage of the materials being screened printed through the openings and prevents a buildup of deposits. Single-sided electroforming produces essentially conical shaped holes; double-sided electroforming produces biconical shaped holes.

Electroformed holes are preferred over punched holes and holes formed by other means because the electroformed holes are smooth so that the screen does not tear the membrane when it is brought into contact with the membrane. Likewise, the electroformed screen is superior to a woven cloth or a woven screen wire mesh because it is substantially flat and does not unevenly penetrate the membrane when contacted therewith.

The shape of the interconnected roadways of catalytically active particles can be symmetrical or nonsymmetrical. If symmetrical, the roadway can form any number of openings of different shapes, such as squares, rectangles, triangles, and the like. As stated, the roadways on the membrane do not need to conform to any particular geometric pattern, either repeating or nonrepeating. The improvements realized by this invention are caused due to the increased ability of the gases to diffuse out of the porous electrode film and into the electrolyte solution, rather than diffusion through the membrane proper and into the electrolyte on the opposite side of the membrane. While there are many factors that determine the diffusion path of gas produced in the porous electrode, it is believed that the open areas of the membrane of the present invention are arranged intimately with the catalytic areas in such a way as to provide lateral pathways for the produced gases to reach the electrolyte solution. By lateral pathways is meant diffusion paths from the gas producing regions in the catalytically active interconnected roadways to the electrolyte solution that extends essentially parallel to the membrane surface. Furthermore, as these open areas are not producing gaseous products, they are not providing a pressure and/or concentration gradient that would work against the desired transport of gaseous products out of the electrocatalytic regions of the M & E structure and into the electrolyte solution.

Experiments show that the extent of gaseous contamination is related more directly to the percentage of open area on the membrane rather than the width of the interconnected roadways. If this is true, then the limitations and preferred ranges of the percentage of open area are also quite important.

The M & E structure of the present invention includes embodiments where catalytically active particles and a substantially flat screen are bonded to or embedded in one or both sides of the membrane. However, the present invention requires that at least one of the electrodes be in the form of a plurality of catalytically active particles contacting the membrane. The electrode can serve, during cell operation, as either a cathode or an anode. Optionally, both electrodes can be catalytically active particles embedded into opposite sides or surfaces of the membrane. For the purposes of the present discussion, the forms of both electrodes will be described as though they are catalytically active particles and will also be described as if they are separate, conventional electrodes.

Conventional anodes are usually hydraulically permeable, electrically conductive structures made in a variety of shapes and styles including, for example, a screen of expanded metal, perforated plate, punched plate, unflattened diamond shaped expanded metal or woven metallic wire. Metals suitable for use as anodes include tantalum, tungsten, niobium, zirconium, molybdenum and, preferably, titanium and titanium alloys containing major amounts of these metals.

Optionally, the anode may be composed of a plurality of catalytically active particles embedded into the membrane. Materials suitable for use as electrocatalytically active anode materials include, for example, activating substances such as oxides of platinum group metals like ruthenium, iridium, rhodium, platinum, palladium, either alone or in combination with an oxide of a film-forming metal. Other suitable activating oxides include cobalt oxide either alone or in combination with other metal oxides. Examples of such activating oxides are found in U.S. Patent Nos. 3,632,498; 4,142,005; 4,061,549 and 4,214,971.

Conventional cathodes are usually hydraulically permeable, electrically conductive structures made in a variety of shapes and styles including, for example, a Screen of expanded metal, perforated plate, punched plate, unflattened diamond shaped expanded metal or woven metallic wire. Metals suitable for use as cathode include, for example, copper, iron, nickel, lead, molybdenum, cobalt, alloys including major amounts of these metals, such as low carbon stainless steel, and metals or alloys coated with substances such as silver, gold, platinum, ruthenium, palladium and rhodium.

Optionally, the cathode may be a plurality of catalytically active particles embedded into the membrane. Materials suitable for use as electrocatalytically active cathode materials include, for example, a platinum group metal or metal oxide, such as ruthenium or ruthenium oxide. U.S. Patent No. 4,465,580 describes such cathodes.

The catalytically active particles, whether used as an anode or as a cathode are, preferably, finely divided and have a high surface area. For example, in the case of an oxygen or hydrogen electrode fuel cell, platinum black (having a surface area of greater than 25 $m^2$/gram) or high surface area platinum (800 to 1800 $m^2$/g) on activated carbon powder (average particle size 10 to 30 $\mu m$ (microns) are quite suitable for use as the anode and the cathode. In the case of a chlorine cell, catalytically active particles may be prepared in which ruthenium dioxide particles are prepared by thermal decomposition of ruthenium nitrate for 2 hours at a temperature of 450°C. The resulting oxide may then be ground using a mortar and pestle and the portion which passed through a 325 mesh sieve (less than 44 $\mu m$ (microns)) used to

prepare the electrode.

Membranes that are suitable for use in the present invention may be constructed of a fluorocarbon-type material or of a hydrocarbon-type material. Such membrane materials are well known in the art. Preferably, however, fluorocarbon materials are generally preferred because of their chemical stability.

Nonionic (thermoplastic) forms of perfluorinated polymers are particularly suitable for use in the present invention because they are easily softened by heating and make it easy to bond the membrane to the electrode and to the flat screen or screen template. Membranes which are suitable are described in the following U.S. Patent Nos.: 3,282,875; 3,909,378; 4,025,405; 4,065,366; 4,116,888; 4,123,336; 4,126,588; 4,151,052; 4,176,215; 4,178,218; 4,192,725; 4,209,635; 4,212,713; 4,251,333; 4,270,996; 4,329,435; 4,330,654; 4,337,137; 4,337,211; 4,340,680; 4,357,218; 4,358,412; 4,358,545; 4,417,969; 4,462,877; 4,470,889 and 4,478,695; and European Patent Publication 0,027,009. Membrane polymers usually have an equivalent weight in the range of from 500 to 2000. The membranes can be a single layer or they can be a multilayer membrane. Some of the more useful membranes are bilayer membranes having sulfonic ion exchange groups in one layer and carboxylic ion exchange groups in the other layer.

To allow the catalytically active particles to be embedded into the fluorocarbon membrane, it is desirable for the fluorocarbon membrane to be in its thermoplastic form. It is in a thermoplastic form when it is made and before it is converted into an ion exchange form. By thermoplastic form, it is meant, for instance, that the membrane has $SO_2X$ pendant groups, where X is -F, $-CO_2$, $-CH_3$ or a quaternary amine, rather than ionically bonded $SO_3Na$ or $SO_3H$ pendant groups.

Particularly preferred fluorocarbon materials for use in forming membranes are copolymers of monomer I with monomer II (as defined following). Optionally, a third type of monomer may be copolymerized with I and II.

The first type of monomer is represented by the general formula:

$$CF_2 = CZZ' \quad \text{(I)}$$

where:

Z and Z' are independently selected from -H, -Cl, -F and $-CF_3$.

The second type of monomer consists of one or more monomers selected from compounds represented by the general formula:

$$Y\text{-}(CF_2)_a\text{-}(CFR_f)_b\text{-}(CFR_{f'})_c\text{-}O\text{-}[CF(CF_2X)\text{-}CF_2\text{-}O]_n\text{-}$$

$$CF = CF_2 \quad \text{(II)}$$

where:

Y is selected from $-SO_2Z$, -CN, -COZ and $C\text{-}(R^3f)(R^4f)OH$;

Z is selected from -I, -Br, -Cl, -F, -OR and $-NR_1R_2$;

R is a branched or linear alkyl radical having from 1 to 10 carbon atoms or an aryl radical;

$R^3f$ and $R^4f$ are independently selected from perfluoroalkyl radicals having from 1 to 10 carbon atoms;

$R_1$ and $R_2$ are independently selected from -H, a branched or linear alkyl radical having from 1 to 10 carbon atoms or an aryl radical;

a is 0-6;

b is 0-6;

c is 0 or 1;

provided $a + b + c$ is not equal to 0;

X is selected from -Cl, -Br, -F and mixtures thereof when n>1;

n is 0 to 6; and

$R_f$ and $R_{f'}$ are independently selected from -F, -Cl, perfluoroalkyl radicals having from 1 to 10 carbon atoms and fluorochloroalkyl radicals having from 1 to 10 carbon atoms.

Particularly preferred is when Y is $-SO_2F$ or $-COOCH_3$; n is 0 or 1; $R_f$ and $R_{f'}$ are -F; X is -Cl or -F; and $a + b + c$ is 2 or 3.

The third, and optional, monomer suitable is one or more monomers selected from the compounds represented by the general formula:

$$Y'\text{-}(CF_2)_{a'}\text{-}(CFR_f)_{b'}\text{-}(CFR_{f'})_{c'}\text{-}O\text{-}[CF(CF_2X')\text{-}CF_2\text{-}O]_{n'}\text{-}$$
$$CF\text{-} = CF_2 \quad \text{(III)}$$

where:

Y' is selected from -F, -Cl and -Br;

a' and b' are independently 0-3;

c is 0 or 1;

provided $a' + b' + c'$ is not equal to 0;

n' is 0-6;

$R_f$ and $R_{f'}$ are independently selected from -Br, -Cl, -F, perfluoroalkyl radicals having from 1 to 10 carbon atoms and chloroperfluoroalkyl radicals having from 1 to 10 carbon atoms; and

X' is selected from -F, -Cl, -Br and mixtures thereof when n'>1.

Conversion of Y to ion exchange groups is well known in the art and consists of reaction with an alkaline solution. The membrane may be converted to its ionic form by reacting it with, in the case of $SO_2F$ pendant groups, 25 weight percent NaOH under the following conditions: (1) immerse the film in about 25 weight percent sodium hydroxide for about 16 hours at a temperature of about 90°C; (2) rinse the film twice in deionized water heated to about 90°C, using from 30 to 60 minutes per rinse.

The pendant group is then in the $-SO_3^-Na^+$ form. Cations other than $-Na^+$ can be made to replace the $Na^+$ if practical (such as $-H^+$).

Preparation of the supported M & E structure of the present invention involves a plurality of steps. First, a membrane and a flat screen are selected. A coating of catalytically active particles is then placed on the screen. There are a number of suitable ways for depositing the particles onto a surface of the flat metal screen. For example, a slurry of the catalytically active particles in a solution or dispersion is painted or sprayed onto the metal screen. Alternatively, the screen can be dipped into the solution or dispersion of the particles. A variety of printing techniques can also be used to apply the slurry onto the membrane.

A particularly suitable method for depositing the catalytic particles onto the screen involves forming a solution/dispersion of the catalytically active particles in a solvent/dispersant.

Solvents/dispersants suitable for use in the present invention should have the following characteristics:

a boiling point of less than 110°C;

a density of from 1.55 to 2.97 $gm/cm^3$; and

a solubility parameter of from greater than 7.1 to 8.2 $(Cal \cdot cm^{-3})^{1/2}$ (hildebrands).

It has been found that solvents/dispersants represented by the following general formula are particularly preferred provided they also meet the characteristics discussed above (boiling point, density and solubility parameter):

$XCF_2$-CYZ-X'

wherein:

X is selected from -F, -Cl, -Br and -I;

X' is selected from -Cl, -Br and -I;

Y and Z are independently selected from -H, -F, -Cl, -Br, -I and -R';

R' is selected from perfluoroalkyl radicals and chloroperfluoroalkyl radicals having from 1 to 6 carbon atoms.

The most preferred solvents/dispersants are 1,2-dibromotetrafluoroethane (commonly known as Freon 114 B 2):

$BrCF_2$-$CF_2Br$

and 1,2,2-trichlorotrifluoroethane (commonly known as Freon 113):

$ClF_2C$-$CCl_2F$

Of these two solvents/dispersants, 1,2-dibromotetraflrnoroethane is the most preferred solvent/ dispersant. It has a boiling point of about 47.3°C, a density of about 2.156 $gm/cm^3$ and a solubility parameter of about 7.2 $(cal \cdot cm^{-3})^{1/2}$ (hildebrands).

1,2-dibromotetrafluoroethane is thought to work particularly well because, though not directly polar, it is highly polarizable. Thus, when 1,2-dibromotetrafluoroethane is associated with a polar molecule, its electron density shifts and causes it to behave as a polar molecule. Yet, when 1,2-dibromotetrafluoroethane is around a nonpolar molecule, it behaves as a nonpolar solvent/dispersant. Thus, 1,2-dibromotetrafluoroethane tends to dissolve the nonpolar backbone of polytetrafluoroethylene and also the polar pendant groups. The solubility parameter of 1,2-dibromotetrafluoroethane is calculated to be from 7.13 to 7.28 $(cal \cdot cm^{-3})^{1/2}$ (hildebrands).

Optionally, and preferably, the solution/ dispersion may contain a binder to help hold the catalytically active particles together and bond them to the screen. Preferred binders include a variety of fluoropolymers, including such materials as polytetrafluoroethylene, perfluorinated polymers and copolymers and ionomers. Particularly preferred as a binder is an ionomer having the same or a similar composition as the ion exchange membrane. Examples of the types of ionomers that are suitable for use as a binder are the same as those shown to be suitable for use as the ion exchange membrane, as discussed above. The solvent/ dispersant discussed above is a solvent for the ion exchange polymer. Thus a solution/dispersion slurry can be formed that contains catalytically active particles, an ion exchange fluoropolymer and a solvent/dispersant. This slurry helps bond the catalytically active particles together and to the screen or screen template.

When the slurry is prepared, the concentration (in the dry form, not including the solvent/dispersant) of the ionomer is preferably from 4 to 20 weight percent. The concentration of the catalytically active particles is greater than 0.1 weight percent but typically does not exceed about 30 weight percent. There is no set maximum limit, however, since the catalytic activity depends upon the type of catalyst being used and since all catalysts perform slightly differently, experimentation with the particular catalyst being used will determine the optimum catalyst level. However, when ruthenium oxide is used, levels from 2 to 20 weight percent have been found to be suitable. All of the percentage weights are based on the total weight of the slurry.

Optionally, an electrically conductive metal can be added to the slurry to increase the electrical conductivity of the catalyst deposited on the membrane. Silver is commonly added, for example, at a level of from 60 to 90 weight percent. Other suitable metals include nickel, tantalum, platinum and gold.

The preparation of the slurry is accomplished using the following procedures. Other techniques may suitably be used. First, the components are weighed and blended with each other in the dry state. Then, sufficient solvent/dispersant is added to cover the dry ingredients. The mixture is then blended in a ball mill for a time period of from 4 to 24 hours to obtain a uniform mixture. This also gives time for the ionomer to be broken up and at least partially dissolved. This aids in bonding the catalytically active particles together. Then, the mixture is allowed to settle and the excess solvent/dispersant is decanted off. At this point, the mixture usually contains 25 weight percent solids.

The flat screen or screen template upon which the solution/dispersion is deposited optionally is cleaned or treated in such a way as to assure uniform contact with the solution/dispersion. The flat screen can be cleansed by washing with a degreaser or similar solvent followed by drying to remove any dust or oils from the flat screen. Metallic screens may be acid etched, then washed with a solvent to promote adhesion, if desired, unless the metal is new, in which case degreasing is sufficient.

After being cleaned, the flat screen may be preconditioned by heating or vacuum drying prior to contact with the solution/dispersion in the coating operation. Temperatures and pressures in the following ranges are preferably used: about 2.7 kPa (20 mm Hg) at a temperature of about 110°C is sufficient in all cases. However, mild heat is usually adequate, on the order of about 50°C at atmospheric pressure.

A variety of methods are suitable, and may be used, for applying the solution/dispersion to the screen. One suitable method involves dipping the screen into the solution/dispersion, followed by air drying and sintering at the desired temperature with sufficient repetition to build up the desired thickness. Spraying the solution/dispersion onto the screen may also be used to advantage for covering large or irregular shapes. Pouring the solution/dispersion onto the screen is sometimes used. Painting the solution/dispersion with brush or roller has been successfully employed. In addition, coatings may be easily applied with metering bars, knives or rods. Usually, the coatings or films are built up to the thickness desired by repetitive application. A plurality of coats of the solution/dispersion may be applied to the screen to build up the desired thickness of the catalytically active particles. Between coats, it is preferably to dry the solution/dispersion by removing the solvent/dispersant. This can be accomplished by allowing the solvent/dispersant to evaporate, by heating or by vacuum drying. The coating may be of any desired thickness. However, a thickness of from 5 to 50 $\mu$m (Microns) has been found to be suitable. Optionally, the coatings applied to the screen can be sintered between coatings and before the coatings are transferred to the membrane.

When the catalytically active particle coating is transferred to the membrane by a coated screen template, the template is placed against one face of the membrane and the combination is subjected to pressure. Optionally, heat may be applied during the pressing cycle to enhance transfer of the catalytically active particles to the membrane and to enhance adhesion of the particles to the membrane. However, the combination should not be heated above a temperature of about 230°C because the membrane will become too soft and will adhere to the screen template. Likewise, pressures in excess of about 686 kPa (7 kg/cm$^2$) should be avoided because they will press the membrane through the holes in the screen template. When the membrane is in its hydrogen form, it should not be heated above a temperature of greater than about 180°C because the membrane tends to decompose. When pressure and heat are both used, the time of pressing should be relatively short, i.e. less than 30 seconds. The time is estimated to be the time necessary to bring the membrane up to the stated temperature. However, when no heat is used, the combination can be pressed for a period of up to about 5 minutes.

After the catalytically active particles have been transferred to the membrane, the pressure and/or heat are removed and the screen is peeled off the membrane, leaving an interconnected roadway pattern of catalytically active particles on the membrane.

It is then necessary to more permanently fix the interconnected roadways of catalytically active particles to the membrane. This may be accomplished by subjecting the coated membrane to additional pressure and heat. The coated membrane (when it is in thermoplastic form or in its sodium form) may, for example, be heated to a temperature as high as about 260°C for a period of from 30 seconds to 1 minute to cause the components to bond together. When the membrane is in its hydrogen form, it should not be heated above a temperature greater than about 180°C because the membrane tends to decompose. These temperatures soften the binder in the slurry and soften the membrane, allowing the two to bond to each other. Too low a temperature or too short a time of heating results in the catalytically active particles not being completely bonded to the membrane. Too long a time results in too much blending of the particles with the membrane. Too high a temperature causes the membrane to melt which prevents the proper M & E structure from being formed.

It is sometimes beneficial to heat the combination under pressures of up to about 343 kPa (3.5 kg/cm$^2$) to ensure good bonding of the components. However, pressures of greater than 343 kPa (3.5 kg/cm$^2$) tend to flatten the combination too much.

Preferably, a heated press is used to bond the components. Although a variety of procedures may be used, one that has been found to be particularly useful involves forming a sandwich of the components between two platens, an upper platen and a lower platen. On top of the lower platen is a screen of polytetrafluoroethylene paper, the membrane having the catalytically active particles coated thereon, another screen of polytetrafluoroethylene paper, a rubber screen to provide resilience, another screen of polytetrafluoroethylene paper, and finally, the upper platen. This sandwich is then placed in a heated press and heated to under pressure to effect the bonding.

The fact that the first face of the screen is substantially flat minimizes the penetration of the catalytically active particles into the space between the solid portions of the screen and the membrane. In other words, the catalytically active solution/ dispersion does not "run" when it is applied to the membrane. Even the screen shown in Figure 2 is sufficiently flat to minimize "running" of the catalytically active solution/dispersion.

Since the catalytic coating covers only a portion of the membrane, less catalytically active material is used. Yet, the catalytic activity of the M & E structure is at least equivalent to the M & E's of the prior art.

It has been discovered that, even though the present invention uses only a portion of the catalytically active particles, the concentration of particles can be reduced even further. For example, a typical solution/dispersion of catalytically active particles contains about 75 weight percent silver, about 16 weight percent ruthenium oxide and about 9 weight percent ionomer. However, using the techniques of the present invention, a slurry containing about 83 weight percent silver, about 8 weight percent ruthenium oxide and about 9 weight percent ionomer performs substantially as well as the one having 16 weight percent ruthenium oxide. This represents a potential savings of approximately one-half of the more expensive ruthenium oxide catalyst.

The methods and techniques in which the membranes of the present invention, having a plurality of interconnected roadways of catalytically active particles bonded to at least one surface of the membrane, are used is well known in the art. Generally, however, a current collector is pressed against the interconnected roadways of catalytically active particles and is connected with a power supply (in the case of an electrolytic cell) or with a power consuming device (in the case of fuel cells or batteries). The current collector conducts electrical energy to (or from) the interconnected roadways of catalytically active particles. It has been found that a particularly suitable current collector is an electrically conductive screen having a pattern identical to the pattern of the interconnected roadways of catalytically active particles. This will assure that each roadway of catalytically active particles can transfer electrical energy to (or from) the current collector. Optionally, a resilient device, such as a mattress, may be used to hold the current collector against the coated membrane.

The M & E structure of the present invention is useful in a wide variety of electrochemical cells including, for example, fuel cells for the continuous production of electrical energy, electrolysis cells for the production of chemical products (such as chlorine and caustic from a sodium chloride brine solution or hydrogen and oxygen from water) and batteries for the intermittent production of electrical energy.

Examples

A mixture of about 76 grams of silver particles, about 16 grams of ruthenium oxide particles and about 8 grams of carboxylic ion exchange fluoropolymer particles were dissolved and suspended in BrCF$_2$-CF$_2$Br in a ball mill. First, the dry components were weighed and blended with each other. Then sufficient solvent/dispersant was added to cover the ingredients. The mixture was then blended in a ball mill for a time period of about 24 hours to obtain a uniform mixture. This also gave time for the ionomer to be broken up and at least partially dissolved. Then, the mixture was allowed to settle and the excess solvent/dispersant was decanted off. At this point, the mixture contained about 25 weight percent solids.

A screen template having an area of approximately 56 cm$^2$ was used to receive the solution/dispersion. The screen template was an electroformed screen template from Perforated Products, Inc., and had a plurality of openings having a diameter of 0.7 mm evenly distributed over its surface. There were a sufficient number of openings to provide a screen having an open surface area of approximately 50 percent. The screen template had a thickness of about 0.07 mm.

The screen template was dipped into the silver/ruthenium oxide/ionomer suspension and was allowed to dry at room temperature. The dipping and drying step was repeated 5 additional times, for a total of six cycles. The coating was allowed to air dry between coatings. The coated screen was then sintered for a time of from 5 to 10 minutes at a temperature of about 260°C. Then, the screen was contacted with a bilayer ion exchange membrane (in its thermoplastic form) that had sulfonic ion exchange groups in one layer and carboxylic ion exchange groups in the other layer. The screen was contacted with the side of the membrane having the carboxylic ion exchange groups.

The combination was placed in a heated, hydraulic press and pressed at about 343 kPa (3.5 kg/cm$^2$) and at a temperature of about 230°C for a time of from 30 to 60 seconds to bond the membrane to the coated screen template.

The combination was removed from the press and cooled. The screen template was then removed, leaving a plurality of interconnected roadways of catalytically active particles bonded to the membrane.

According to another aspect of the invention, an electrically conductive screen is coated with the catalytically active particles and then contacted with a membrane to which it is to be bonded and heated under pressure for a short period of time. When the membrane is in a thermoplastic form or in a sodium form, the following conditions may be used for bonding. It may be heated to temperatures of up to about 260°C for a time period of from 30 seconds to 1 minute. The time is estimated to be the time necessary to bring the membrane up to the stated temperature. Too low a temperature or too short a time of heating results in the screen not being completely bonded to the membrane. Too long a time results in the metal of the screen passing entirely through the membrane and not being located on its surface. Too high a temperature causes the membrane to melt which prevents the proper M & E structure from being formed. It is sometimes beneficial to heat the screen/membrane combination under pressures of up to about 343 kPa (3.5 kg/cm$^2$). Pressures greater than about 343 kPa (3.5 kg/cm$^2$) tend to push the membrane completely through the screen. When, however, the membrane is in a hydrogen form, it should not be heated above about 180°C.

To press the screen into the membrane, the procedure hereinbefore discussed is preferably used in which a sandwich of the components is formed between two platens, an upper platen and a lower platen. On top of the lower platen is a screen of polytetrafluoroethylene paper, the membrane, the coated screen, another screen of polytetrafluoroethylene paper and finally, the upper platen. This sandwich is then placed in a heated press and heated to a temperature of about 260°C for about 90 seconds.

The electrically conductive screen of the present invention is far superior in usefulness to window-screen types that are used in the prior art because such window-screen types are not substantially flat, but have a woven and thus a wavy and uneven or somewhat nonplanar surface structure. The screen of the invention is preferably metallic but may be constructed form other materials so long as it is electrically conductive.

The thickness of the screen preferably should not exceed the thickness of the layer of the membrane to which the screen is to be bonded by more than about 25 percent. In other words, if the membrane is a bilayer membrane having one layer of sulfonic polymer and another layer of carboxylic polymer, if the screen is to be bonded to the carboxylic layer, the screen thickness should not exceed the thickness of the carboxylic layer by more than 25 percent. If the screen is too thick, it will penetrate too far into the membrane and will be more likely to be chemically attacked by the chemicals in the opposing compartment of the cell. More preferably, the thickness of the screen does not exceed the thickness of the layer of the membrane to which the screen is to be bonded.

The width or diameter of the layer of catalytically active particles, as bonded to the membrane, is preferably less than about 1 cm, more preferably less than about 0.5 cm and most preferably less than about 0.2 cm. Dimensions larger than these ranges result in increased gas contamination of the products produced in the opposing side of the cell, because it is thought that the gas encounters less resistance in going through the membrane to the opposing side of the cell than it encounters in escaping through the catalytically active particles.

## Claims

1. A composite membrane/electrode structure consisting of:
   a substantially planar ion exchange membrane having a plurality of interconnected roadways of catalytically active particles bonded to at least one planar surface of the membrane, wherein the interconnected roadways cover from 25 to 75 percent of said membrane surface, and wherein the width of the roadways of catalytically active particles is from 20 $\mu$m (microns) to 0.5 cm.

2. The structure of Claim 1, wherein the interconnected roadways cover from 45 to 55 percent of said membrane surface.

3. The structure of Claim 1, wherein the membrane is selected from a fluorocarbon-type or hydrocarbon-type material, and wherein the plurality of catalytically active particles are selected from oxides of ruthenium, iridium, rhodium, platinum, palladium and mixtures thereof, optionally in combination with an oxide of a film-forming metal and cobalt oxide either alone or in combination with other metal oxides.

4. The structure of Claim 1, including a plurality of electrically conductive metal particles distributed among the catalytically active particles.

5. The structure of Claim 4, wherein the electrically conductive metal particles are selected from silver, nickel, tantalum, platinum and gold.

6. The structure of Claim 1, wherein the catalytically active particles are in a layer having a thickness of from 5 to 20 $\mu$m (microns).

7. The structure of Claim 1, wherein the interconnected roadways of catalytically active particles contain a binder of a fluorocarbon polymer.

8. The structure of Claim 1, further comprising a generally planar electrically conductive screen having a plurality of openings passing therethrough, said openings occupying from 25 to 75 percent of the surface area of the screen; wherein the catalytically active particles are sandwiched between the membrane and the screen.

9. The structure of Claim 8, wherein the screen is an electroformed metallic screen.

10. The structure of Claim 8 or 9, wherein the screen is nonporous around its peripheral edges.

11. The structure of Claim 8 or 9, wherein the thickness of the screen does not exceed the thickness of a layer of the membrane to which the screen is attached by more than about 25 percent.

12. A method for making an improved composite membrane/electrode structure, comprising the steps of:
    (a) at least partially coating at least one surface of a substantially planar screen template with a plurality of catalytically active particles, wherein said screen template has a plurality of openings passing therethrough, said openings occupying from 25 to 75 percent of the surface area of the screen template;
    (b) contacting a planar surface of an ion exchange membrane with the coated surface of the screen template,
    (c) transferring the catalytically active particles from the screen template to the membrane;
    (d) removing the screen template, and
    (e) bonding the catalytically active particles to the membrane.

13. The method of Claim 12, wherein the catalytically active particles are coated onto the screen in the form of a solution/dispersion, wherein the solution/dispersion is formed from a solvent/dispersant represented by the general formula:

$$XCF_2\text{-}CYZ\text{-}X'$$

wherein:
    X is selected from -F, -Cl, -Br and -I;
    X' is selected from -Cl, -Br and -I;
    Y and Z are independently selected from -H, -F, -Cl, -Br, -I and -R';
    R' is selected from perfluoroalkyl radicals and chloroperfluoroalkyl radicals having from 1 to 6 carbon atoms.

14. The method of Claim 13 wherein the solution/dispersion contains from 4 to 20 weight percent of an ionomer.

15. The method of Claim 13, wherein the solution/dispersion contains from 0.1 to 30 weight percent of said catalytically active particles.

16. The method of Claim 13, wherein the solution/dispersion contains from 60 to 90 weight percent of an electrically conductive metal.

17. The method of Claim 12, including the step of bonding the screen template to the membrane at a temperature of up to 260° C at a pressure of up to 343 kPa ($3,5$ kg/cm$^2$).

**Patentansprüche**

1. Membran/Elektrodenverbundstruktur, bestehend aus:
einer im wesentlichen planaren, eine Vielzahl von miteinanderverbundenen Wegen von katalytisch aktiven Teilchen, die an Wenigstens eine planare Oberfläche der Membran gebunden sind, aufweisende Ionen-Austausch-Membran, worin die miteinanderverbundenen Wege die Oberfläche der Membran von 25-75% bedecken, und worin die Weite der Wege von katalytisch aktiven Teilchen von 20 $\mu$m

(Micron) bis 0,5 cm ist.

**2.** Struktur nach Anspruch 1, worin die miteinanderverbundenen Wege die Membranoberfläche von 45 bis 55% bedecken.

**3.** Struktur nach Anspruch 1, worin die Membran ausgewählt ist aus einem Fluorkohlenstoff-Typ oder Kohlenwasserstoff-Typ Material, und worin die Vielzahl von katalytisch aktiven Teilchen ausgewählt wird aus Oxiden von Ruthenium, Iridium, Rhodium, Platin, Palladium und Mischungen davon, gegebenfalls in Kombination mit einem Oxid eines filmbildenden Metalls und Cobalt-Oxid entweder alleine oder in Kombination mit anderen Metall-Oxiden.

**4.** Struktur nach Anspruch 1, welche eine Vielzahl von elekrisch leitfähigen unter die katalytisch aktiven Teilchen verteilten Metallteilchen einschließt.

**5.** Struktur nach Anspruch 4, worin die elektrisch leitfähigen Metallteilchen ausgewählt sind aus Silber, Nickel, Tantal, Platin und Gold.

**6.** Struktur nach Anspruch 1, worin die katalytisch aktiven Teilchen in einer, eine Dicke von 5 bis 20 $\mu$m (Mikron) aufweisenden Schicht sind.

**7.** Struktur von Anspruch 1, worin die miteinanderverbundenen Wege von katalytisch aktiven Teilchen einen Binder eines Fluorkohlenstoff-Polymers enthalten.

**8.** Struktur nach Anspruch 1, weiter umfassend ein im wesentlichen planares elektrisch leitfähiges, eine Vielzahl von hindurchführenden Öffnungen aufweisendes, Gitter, wobei die Öffnungen von 25 bis 75 % den Oberflächebereich des Gitters bedecken; worin die katalytisch aktiven Teilchen zwischen der Membran und dem Gitter eingelegt sind.

**9.** Struktur nach Anspruch 8, worin das Gitter ein elektrogeformtes metallisches Gitter ist.

**10.** Struktur nach Anspruch 8 oder 9, worin das Gitter um seine Außenränder herum nicht porös ist.

**11.** Struktur nach Anspruch 8 oder 9, worin die Dicke des Gitters nicht die Dicke einer Schicht der Membran, an die das Gitter gebunden ist, zu mehr als etwa 25% übersteigt.

**12.** Verfahren zur Herstellung einer verbesserten Membran/Elektroden-Verbundstruktur, umfassend die Schritte von:
(a) wenigstens teilweise wenigstens eine Oberfläche einer im wesentlichen planaren Gitter-Form mit einer Vielzahl von katalytisch aktiven Teilchen zu beschichten, wobei die Gitter-Form eine Vielzahl von hindurchführenden Öffnungen besitzt, und die Öffnungen von 25 bis 75% des Oberflächenbereichs der Gitter-Form bedecken;
(b) eine planare Oberfläche einer Ionenaustausch-Membran mit der beschichteten Oberfläche der Gitter-Form in Kontakt zu bringen,
(c) die katalytisch aktiven Teilchen von der Gitter-Form auf die Membran zu überführen;
(d) die Gitter-Form zu entfernen, und
(e) die katalytisch aktiven Teilchen an die Membran zu binden.

**13.** Verfahren nach Anspruch 12, worin die katalytisch aktiven Teilchen auf das Gitter in Form einer Lösung/Dispersion aufgebracht werden, wobei die Lösung/Dispersion aus einem Lösungs-/Dispersionsmittel hergestellt wird, das durch die allgemeine Formel dargestellt wird:

$$XCF_2\text{-}CYZ\text{-}X'$$

worin:

| | |
|---|---|
| X | ausgewählt wird aus -F, -Cl, -Br und -I; |
| X' | ausgewählt wird aus -Cl, -Br, und -I; |
| Y und Z | unabhängig voneinander ausgewählt werden aus -H, -F, -Cl, -Br, -I, und -R'; |
| R' | ausgewählt wird aus Perfluoralkylresten und Chlorperfluoralkylresten mit von 1 bis 6 Kohlenstoffatomen. |

**14.** Verfahren nach Anspruch 13, worin die Lösung/Dispersion von 4 bis 20 Gew.-% eines Ionomers enthält.

**15.** Verfahren nach Anspruch 13, worin die Lösung/Dispersion von 0,1 bis 30 Gew.-% der katalytisch aktiven Teilchen enthält.

**16.** Verfahren nach Anspruch 13, worin die Lösung/Dispersion von 60 bis 90 Gew.-% eines elektrisch leitfähigen Metalls enthält.

**17.** Verfahren nach Anspruch 12, einschließend den Schritt des Bindens der Gitter-Form an die Membran bei einer Temperatur von bis zu 260°C bei einem Druck von bis zu 343 kPa

(3,5 Kg/cm$^2$).

**Revendications**

1. Structure composite membrane/électrode constituée de:
   une membrane échangeuse d'ions quasiment plane ayant un ensemble de réseaux de particules catalytiquement actives lié à au moins une surface plane de la membrane, dans laquelle le réseau couvre de 25 à 75 pour-cent de ladite surface de la membrane, et dans laquelle la largeur des branches du réseau de particules catalytiquement actives est de 20 $\mu$m (microns) à 0,5 cm.

2. Structure selon la revendication 1, dans laquelle le réseau couvre de 45 à 55 pour-cent de ladite surface de membrane.

3. Structure selon la revendication 1, dans laquelle la membrane est choisie parmi un matériau de type fluorocarbure ou de type hydrocarbure, et dans laquelle l'ensemble des particules catalytiquement actives est choisi parmi les oxydes de ruthénium, d'iridium, de rhodium, de platine, de palladium et leurs mélanges, facultativement en combinaison avec un oxyde d'un métal filmogène et un oxyde de cobalt soit seul soit en combinaison avec d'autres oxydes métalliques.

4. Structure selon la revendication 1, comprenant un ensemble de particules métalliques conductrices de l'électricité réparties parmi les particules catalytiquement actives.

5. Structure selon la revendication 4, dans laquelle les particules métalliques conductrices de l'électricité sont choisies parmi l'argent, le nickel, le tantale, le platine et l'or.

6. Structure selon la revendication 1, dans laquelle les particules catalytiquement actives sont dans une couche ayant une épaisseur de 5 à 20 $\mu$m (microns).

7. Structure selon la revendication 1, dans laquelle le réseau de particules catalytiquement actives contient un liant constitué d'un polymère de fluorocarbure.

8. Structure selon la revendication 1, comprenant de plus une grille conductrice de l'électricité généralement plane ayant un ensemble d'ouvertures la traversant, lesdites ouvertures occupant de 25 à 75 pour-cent de la surface de la grille; dans laquelle les particules catalytiquement actives sont prises en sandwich entre la membrane et la grille.

9. Structure selon la revendication 8, dans laquelle la grille est une grille métallique électroformée.

10. Structure selon la revendication 8 ou 9, dans laquelle la grille est non poreuse autour de ses bords périphériques.

11. Structure selon la revendication 8 ou 9, dans laquelle l'épaisseur de la grille ne dépasse pas l'épaisseur d'une couche de la membrane à laquelle la grille est attachée de plus qu'environ 25 pour-cent.

12. Procédé de fabrication d'une structure composite améliorée membrane/électrode, comprenant les étapes de:
    (a) revêtement au moins partiel d'au moins une surface d'un gabarit de grille pratiquement plan avec un ensemble de particules catalytiquement actives, dans lequel ledit gabarit de grille a un ensemble d'ouvertures le traversant, lesdites ouvertures occupant de 25 à 75 pour-cent de la surface du gabarit de grille;
    (b) mise en contact d'une surface plane d'une membrane échangeuse d'ions avec la surface revêtue du gabarit de grille;
    (c) transfert des particules catalytiquement actives du gabarit de grille à la membrane;
    (d) élimination du gabarit de grille; et
    (e) liaison des particules catalytiquement actives à la membrane.

13. Procédé selon la revendication 12, dans lequel les particules catalytiquement actives sont déposées sur la grille sous la forme d'une solution/dispersion, dans lequel la solution/dispersion est formée à partir d'un solvant/dispersant représenté par la formule générale:

    XCF$_2$-CYZ-X'

    dans laquelle:
    X est choisi parmi F, Cl, Br et I;
    X' est choisi parmi Cl, Br et I;
    Y et Z sont choisis indépendamment parmi H, F, Cl, Br, I et R';
    R' est choisi parmi les radicaux perfluoroalkyle et les radicaux chloroperfluoroalkyle ayant de 1 à 6 atomes de carbone.

14. Procédé selon la revendication 13, dans lequel la solution/dispersion contient de 4 à 20 pour-cent en poids d'un ionomère.

15. Procédé selon la revendication 13, dans lequel la solution/dispersion contient de 0,1 à 30 pour-cent en poids desdites particules catalytiquement actives.

16. Procédé selon la revendication 13, dans lequel la solution/dispersion contient de 60 à 90 pour-cent en poids d'un métal conducteur de l'électricité.

17. Procédé selon la revendication 12, comprenant l'étape de liaison du gabarit de grille à la membrane à une température allant jusqu'à 260° C sous une pression allant jusqu'à 343 kPa (3,5 kg/cm$^2$).

FIG.1

FIG.2

FIG.3